# EUROPEAN PATENT SPECIFICATION

(11) **EP 3 945 727 B1**
(45) Date of publication and mention of the grant of the patent: **03.01.2024**
(21) Application number: 20382675.5
(22) Date of filing: 27.07.2020
(51) Int. Cl.: H04R 1/10, A42B 3/30, H04M 1/05, H04R 1/08

(54) **A WIRELESS COMMUNICATION DEVICE WITH A HOLDER ATTACHABLE TO A HELMET STRAP**
DRAHTLOSES KOMMUNIKATIONSGERÄT MIT EINER AN EINEM HELMGURT BEFESTIGBAREN HALTERUNG
DISPOSITIF DE COMMUNICATION SANS FIL AVEC UN SUPPORT POUVANT ÊTRE FIXÉ À UNE SANGLE DE CASQUE

(43) Date of publication of application: 02.02.2022
(73) Proprietor: Mat Product & Technology, SL, 08223 Terrassa (ES)
(72) Inventor: CADENS BALLARIN, Javier, 08830 Sant Boi de Llobregat (ES); MATEU CODINA, Xavier, 08230 Matadepera (ES)
(74) Representative: Juncosa Miró, Jaime

(56) References cited:
- WO-A1-2004/023914
- WO-A1-2011/017258
- US-A- 3 815 155
- US-A1- 2003 083 112

## Description

### Field of the Art

The present invention relates to a wireless communication device with a holder integrable in a helmet, specifically a communication device including a speaker, a microphone, a battery, and a wireless communication device which allows connection and wireless transmission of information with another device such as, for example, a mobile telephone or another communication device equivalent to that herein described.

The holder allows fixing said wireless communication device to a helmet, typically to one of its straps, holding said communication device in a desired position with respect to the head of a user wearing the helmet, typically holding the speaker facing the ear of the user and the microphone a certain distance from the speaker and closer to the mouth of the user than the speaker.

### State of the Art

Wireless communication devices integrating a speaker, a microphone, a battery, and an antenna are known. Integrating the speaker in a first housing and the microphone in a second housing, said housings being connected to and distanced from one another by a rigid or deformable duct, is also known.

The inclusion of a holder coupled to the first housing for fixing said first housing to a helmet is also known.

However, the holders known up until now require adaptations of the helmet or the adhesion of parts of the holder to said helmet, or require a full-face helmet covering the ears of the user, the first housing being located inside the helmet, typically fixed to the inside of the helmet by a holder consisting of a Velcro.

These known solutions are difficult to affix or adjust, or require modifications of the helmet which may damage it or negatively affects its appearance.

Furthermore, many of the known solutions do now allow integrating the wireless communication device in a light-weight non-full-face helmet which usually do not cover the ears such as, for example a bicycle helmet, climbing helmet, caving helmet, protective helmet for labor works, or sporting helmets of different type.

Furthermore, many of the known devices only allow being fixed with a small number of helmet models, where the compatibility thereof must be verified before acquiring the product.

Another problem of the existing devices is the limited or non-existent adjustment capacity for adjusting the position of the speaker and the microphone with respect to the user, or even if there is such capacity, it is complicated, and therefore the configuration required to achieve said adjustment is expensive, or it is hard for a layman to readily perform said adjustment.

The present invention proposes a wireless communication device which can be fixed to almost all the helmets existing on the market that do not cover the ears of the user, therefore entailing a virtually universal device, and furthermore enabling the easy adjustment and adaptation thereof. The present invention solves the problems described above and many others.

WO 2011/017258 A1 discloses a wireless communication device according to the preamble of claim 1. Another communication device configured to be attached to a helmet strap is known from US 2003/083112 A1.

### Brief Description of the Invention

The present invention provides a wireless communication device with a holder configured to be attached to a helmet strap according to claim 1.

The holder allows fixing and holding the wireless communication device to a helmet in a predefined position with respect to the ear and mouth of the user of said helmet.

The proposed wireless communication device with a holder includes, in a manner that is known *per se*:
- a speaker contained in a first flattened housing defining a main internal face associated with the speaker, a main external face, and a perimeter which is shaped like a circle or regular polygon with at least six faces;
- a microphone contained in a second housing connected to and distanced from the first housing by a rigid or deformable duct;
- a battery and an antenna, connected to the speaker and the microphone, contained in said first and/or second housing.

The first flattened housing is intended for being arranged with its main internal face facing the ear of the user, such that the speaker associated with said main internal face effectively emits sound to the ear of the user, achieving optimal sound transmission even in noisy environments.

The second housing, including the microphone, is coupled to the first housing through a duct, the microphone being spaced from the speaker to prevent interferences.

The antenna will be a transmitting/receiving antenna capable of transmitting and receiving radiofrequency signals, which allows connecting the wireless communication device to another device for the wireless transmission of information. The sound signals emitted by the speaker and received by the microphone may be transmitted through said antenna in the form of radiofrequency signals.

A battery contained in the wireless communication device will power all the devices making up same. Typically, a charging port will also be included for recharging the battery.

This allows, for example, connecting the communication device with a terminal, such as a mobile telephone and/or another nearby wireless communication device, so as to transmit sound information from said terminal to the speaker by wireless means, for example, music, an audio signal from a telephone call or from another nearby wireless communication device, or direction indications of a positioning device such as a GPS. It also allows transmitting sound information captured by the microphone of the wireless communication device to the terminal.

The battery and the antenna will be integrated in the first and/or second housings, but both of them will preferably be arranged in the first housing.

The first housing and the second housing are connected through a rigid or deformable duct, which allows slight adjusting the position of the second housing with respect to the first housing, and therefore the position of the microphone. Conductor cables for connecting the components contained in the first housing with those contained in the second housing will be provided through said duct.

The present invention furthermore proposes for the mentioned holder of the wireless communication device to include:
- a first anchorage, elastically attached around the perimeter of the first housing, enabling the first housing to be positioned at different angular positions to the first anchorage, and
- a second anchorage, adjacent to and attached to the first anchorage, intended to be fixed to a helmet strap.

Therefore, the first anchorage at least partially surrounds the first housing around the perimeter thereof, requiring elastic deformation of the first anchorage for attaching and detaching the first housing with respect to the first anchorage.

Given that said perimeter is shaped like a circle or regular polygon with at least six faces which, by definition, is inscribed in a circular contour, the first housing can be positioned at different angular positions to the first anchorage, enabling the angle of the first housing, and therefore of the second housing connected to the first housing, to be adjusted with respect to the holder.

According to the invention, the first anchorage is facing the main external face of the first housing and includes several elastically deformable legs arranged around the perimeter of the first housing, retaining the first housing anchored to the first anchorage.

Said legs may be three legs that will preferably be arranged with an equidistant angular separation.

With the perimeter of the first housing being polygonal, the elastically deformable legs of the first anchorage will preferably be configured to undergo deformation when the first housing with a polygonal perimeter rotates with respect to the first anchorage, but without releasing the first housing during said deformation. This allows the first housing to rotate with respect to the first anchorage between several angular positions predefined by the number of edges of the polygonal perimeter, but without the first housing being released from the first anchorage during said rotation.

For example, a first housing with a hexagonal perimeter (i.e., with six identical faces) will allow positioning the first housing, with respect to the first anchorage, at stable angular positions every 60°, which is the angular distance separating each of said six faces of the perimeter with respect to the center thereof (said 60° resulting from dividing 360° among 6 faces of the hexagon).

If the perimeter is octagonal (with eight identical faces), the stable angular positions will be every 45°.

If the perimeter is decagonal (with ten identical faces), the stable angle will be every 36°.

If the perimeter is dodecagonal (with twelve identical faces), the stable angular positions will be every 30°.

It will be understood that a stable angle is that in which the elastic force exerted by the legs of the first anchorage on the perimeter of the first housing is lower. Alternatively, the perimeter of the first housing can be circular. In this case, the elastically deformable legs of the first anchorage will be configured to exert elastic pressure on said perimeter of the first housing when they are in the anchored position, hindering the free rotation thereof.

It is also proposed for the second anchorage to be an adjustable sliding buckle intended for being anchored to a helmet strap. Said adjustable sliding buckle can slide along the strap when it is not tighten, enabling the adjustable sliding buckle, and therefore the first housing coupled thereto through the first anchorage, to be positioned at the desired height. When the strap is tighten, i.e., when the helmet is correctly fixed to the head of the user, the adjustable sliding buckle will be fixed in place, with the accidental sliding thereof being prevented.

Said adjustable sliding buckle will preferably consist of a central bar and a frame integrating two frame bars parallel to and separated from the central bar. The helmet strap will go above the frame bars and below the central bar, or vice versa.

Preferably, the central bar or the frame bars include an interruption. This allows attaching the strap to the adjustable sliding buckle through an intermediate portion of said strap, without having to thread one end of the strap through the adjustable sliding buckle, making it easier to affix and remove same to/from any helmet.

In an alternative embodiment, the second anchorage can be a clamp, intended for surrounding and pressing on a helmet strap, preventing the sliding of the second anchorage, or a trident, envisaged for the helmet strap to go through it in a zigzag manner such that, with the strap being tightened, the sliding of said second anchorage is prevented.

It is also proposed for the first anchorage and the second anchorage to be attached to one another and are monolithic, i.e., for said anchorages to be made up of a single continuous element of the same material. Preferably, said material will be molded plastic including the first and second anchorages.

The second anchorage is connected to the first anchorage through a portion of the frame other than the frame bars. In other words, an area of the frame other than the frame bars will be connected to the first anchorage. Typically, said area of the frame will be a side of the frame connecting the ends of the frame bars.

The versatility of the assembly formed by the wireless communication device and the holder, the angle of which can be freely adjusted, allows modifying the configuration of the assembly depending on the helmet to which it is attached and also depending on the side of the helmet to which it is attached, enabling the use of the assembly in both the right ear and the left ear, and also enabling the holder to be fixed, by means of the second anchorage, to a helmet strap going between the ear and the face, where it stays in front of the ear, or between the ear and the nape, where it stays behind the ear. Furthermore, the position of the second anchorage on the mentioned shaft can also be adjusted.

All these possibilities allow the first housing to always be positioned in front the ear of the user with almost all the helmets available on the market which leave the ears uncovered, furthermore enabling the user to select the side on which the assembly is to be affixed.

The wireless communication device may furthermore include an additional speaker contained in a third housing.

Said third housing will be fixed to an additional holder equipped with an additional second anchorage with the same characteristics as second anchorage described above, and which will allow fixing the third housing to a strap of the same helmet supporting the rest of the device, but on an opposite side of the head of the user, facing the other ear.

The additional speaker will be connected to the rest of the wireless communication device by means of a cable or alternatively by wireless means, in which case the third housing will include another battery and another antenna.

It will be understood that references a geometric position such as, for example, parallel, perpendicular, tangent, etc. allow deviations of up to ±5° with respect to the theoretical position defined by said nomenclature.

Other features of the invention will become apparent in the following detailed description of an embodiment.

### Brief Description of the Figures

The foregoing and other advantages and features will be more fully understood based on the following detailed description of an embodiment on reference to the attached drawings that must be interpreted in an illustrative and non-limiting manner, in which:

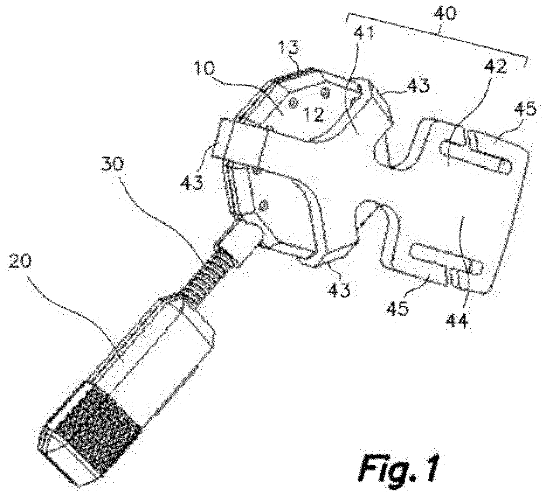

Figure 1 shows a perspective view of an embodiment of the invention, the wireless communication device and the holder being at a first angle;

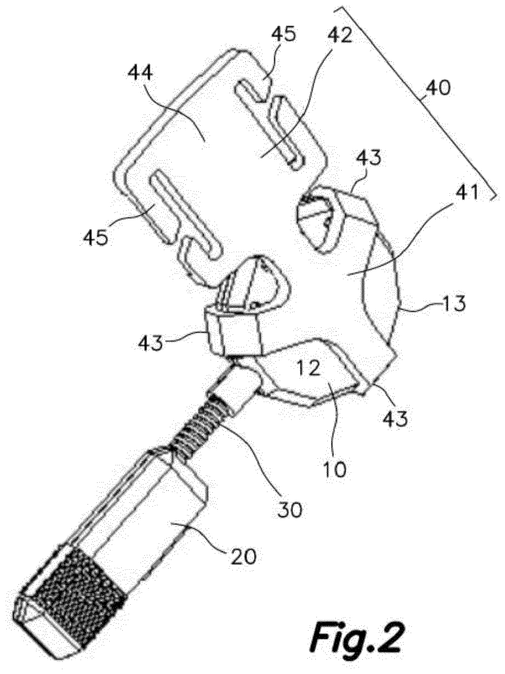

Figure 2 shows a perspective view of an embodiment of the invention, the wireless communication device and the holder being at a second angle;

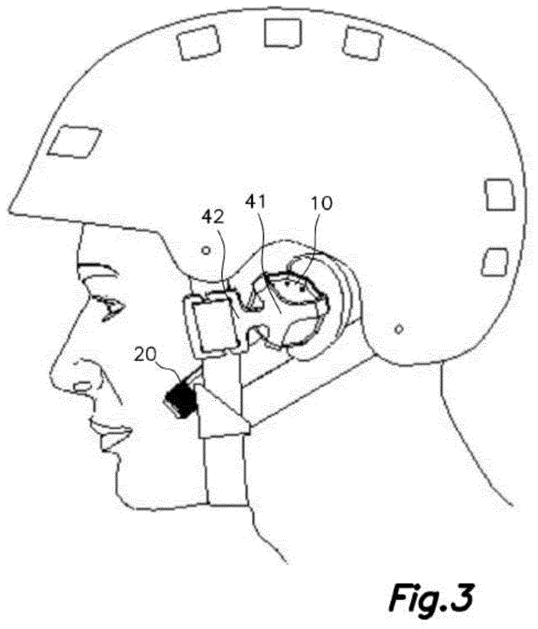

Figure 3 shows the wireless communication device fixed to a helmet strap located between the ear and the face of the user;

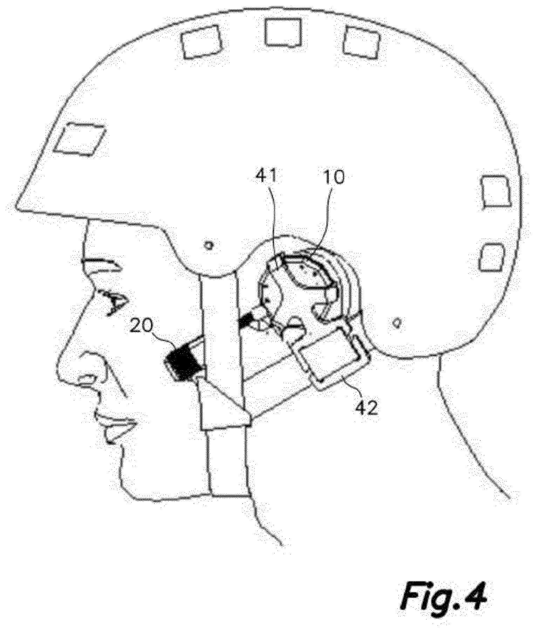

Figure 4 shows the wireless communication device fixed to a helmet strap located between the ear and the nape of the user.

### Detailed Description of an Embodiment

The attached figures show illustrative and non-limiting embodiments of the present invention.

According to the embodiment shown in the attached figures, the proposed wireless communication device comprises a first flattened housing 10 having a general rounded configuration and a second flattened housing 20 having a general elongated configuration.

Both first and second housings 10 and 20 are coupled through a duct 30 holding the second housing 20 a distance from the first housing 10. Said duct 30 is flexible or deformable, enabling the position of the second housing 20 to be modified with respect to the first housing 10.

The first housing 10 has two main faces, a main internal face and a main external face 12, connected through a perimetral area of the first housing 10 determining the perimeter 13 thereof. In this example, said perimeter 13 dodecagonal, i.e., is shaped like a regular polygon with twelve identical faces with an angular separation of 30° therebetween with respect to the center.

In this example, the first housing 10 contains a speaker associated with the main internal face, i.e., said speaker can project sound through said main internal face.

The second housing 20 contains a microphone at its end farthest away from the first housing 10.

The wireless communication device also includes, integrated in said first and second housings 10, 20, a battery and an antenna. Other elements such as, for example, a charging port of the battery, a push-button for activating the device or for other functions, and optionally also a light, are also included.

The antenna allows connecting the speaker and the microphone with a terminal, for example, a mobile telephone, from which control will be performed and data will be supplied to the wireless communication device.

The present invention also includes a holder 40, formed by a first anchorage 41, intended for being fixed to the first housing 10, and a second anchorage 42, intended for being fixed to a helmet strap.

In the present embodiment, the first anchorage consists of three legs 43, with an angular separation of 120° therebetween, surrounding the perimeter 13 of the first housing 10.

Said first housing 10 has been attached to the first anchorage 10 by means of the elastic deformation of the legs 43, and the legs 43 must deform again for the release thereof.

Each leg 43 has a facing lower surface complementary to the perimeter 13. In this case, said lower surface is complementary to one of the straight sections defining the dodecagonal perimeter 13.

This arrangement allows retaining the first housing 10 at a specific angle with respect to the first anchorage 41, but allows the user to modify said angle in sections of 30° by exerting a certain force to cause said rotation, causing partial elastic deformation of the legs 43 during said rotation. This will lead to stable positions every 30° and unstable intermediate positions, as well as a characteristic noise when changing from one stable position to the next.

The second anchorage 42 of the holder 40 will be located on one side of the first anchorage 41 and connected thereto in an integral manner.

In this embodiment, the second anchorage 42 consists of an adjustable sliding buckle. Said adjustable sliding buckle includes a frame, with two parallel frame bars 45, and a central bar 44 parallel to and interposed between the frame bars 45. In this example, the two frame bars 45 include an interruption, which allows the helmet strap to be introduced between the frame bars 45 and the central bar 44 through an intermediate area of the strap.

With the strap hanging loosely, the adjustable sliding buckle can slide along the strap, adjusting its position, and therefore the position of the wireless communication device, but with the helmet strap tightened, the sliding thereof will be prevented.

The first anchorage 41 and the second anchorage 42 are formed by a single monolithic molded plastic part, so it is an extremely cost-effective, resistant, and long-lasting element.

## Claims

1. A wireless communication device with a holder configured to be attached to a helmet strap, comprising:
a speaker contained in a first flattened housing (10) which defines a main internal face, associated with the speaker and intended to face a user ear, a main external face (12), and a perimeter (13) connecting a perimeter area of the main internal face and of the main external face;
a microphone, wherein the microphone is contained in a second housing (20) connected to and distanced from the first housing (10) by a rigid or deformable duct (30);
a battery and an antenna are connected to the speaker and the microphone and are contained in said first and/or second housing (10, 20);
**characterised in that**
the holder (40) includes a first anchorage (41), facing the main external face (12) of the first housing (10) and including several elastically deformable legs (43) arranged around the perimeter (13) of the first housing (10), said legs (43) attaching the first anchorage (41) to the perimeter (13) of the first housing (10),
the holder (40) further includes a second anchorage (42), adjacent to and attached to the first anchorage (41), intended to be fixed to the helmet strap; and wherein
the perimeter (13) of the first housing (10) is shaped as a regular polygon with at least six faces and the elastically deformable legs (43) are configured to undergo deformation when the first housing (10) with a polygonal perimeter (13) rotates with respect to the first anchorage (41), but without releasing the first housing (10) during said deformation; or
the perimeter (13) of the first housing (10) is circular and the elastically deformable legs (43) of the first anchorage (41) are configured for exerting elastic pressure on said perimeter (13) of the first housing (10), hindering the free rotation thereof;
enabling the first housing (10) to be positioned at different angular positions to the first anchorage (41).

2. The communication device according to claim 1, wherein the legs (43) are three legs.

3. The communication device according to any one of the preceding claims, wherein the perimeter (13) of the first housing (10) is shaped like an octagon, decagon, or dodecagon, enabling the first housing (10) to be positioned at different angular positions with a 45°, 36°, or 30° difference, respectively, to the first anchorage (41).

4. The communication device according to any one of the preceding claims, wherein the second anchorage (42) is an adjustable sliding buckle.

5. The communication device according to claim 4, wherein the adjustable sliding buckle consists of a central bar (44) and a frame integrating two frame bars (45) parallel to and separated from the central bar (44).

6. The wireless communication device according to claim 5, wherein the central bar (44) or the frame bars (45) include an interruption.

7. The wireless communication device according to claim 5 or 6, wherein the second anchorage (42) is connected to the first anchorage (41) through a portion of the frame of the adjustable sliding buckle other than the frame bars (45).

8. The wireless communication device according to any one of the preceding claims 1 to 3, wherein the second anchorage (42) is a clamp, intended for surrounding and pressing on the helmet strap, or a trident, intended for the helmet strap to go through it in a zigzag manner.

9. The wireless communication device according to any one of the preceding claims, wherein the first anchorage (41) and the second anchorage (42) are attached to one another and are monolithic.

10. The wireless communication device according to any one of the preceding claims, wherein the wireless communication device furthermore includes an additional speaker contained in a third housing fixed to an additional holder equipped with an additional second anchorage with the same characteristics as the second anchorage (42), the additional speaker being connected to the rest of the wireless communication device by a cable or by wireless means.

## Patentansprüche

1. Drahtlose Kommunikationsvorrichtung mit einer Halterung, die ausgebildet ist, um an einem Helmgurt befestigt zu werden, die Folgendes umfasst:
einen Lautsprecher, der in einem ersten abgeflachten Gehäuse (10) enthalten ist, das eine innere Hauptfläche, die mit dem Lautsprecher assoziiert und dazu bestimmt ist, einem Ohr des Nutzers zugewandt zu sein, eine äußere Hauptfläche (12) und einen Umfang (13) definiert, der einen Umfangsbereich der inneren Hauptfläche und der äußeren Hauptfläche verbindet; ein Mikrofon, wobei das Mikrofon in einem zweiten Gehäuse (20) enthalten ist, das mit dem ersten Gehäuse (10) verbunden und von diesem durch einen starren oder verformbaren Kanal (30) beabstandet ist; wobei eine Batterie und eine Antenne mit dem Lautsprecher und dem Mikrofon verbunden sind und in dem ersten und/oder zweiten Gehäuse (10, 20) enthalten sind; **dadurch gekennzeichnet, dass**
die Halterung (40) eine erste Verankerung (41) einschließt, die der äußeren Hauptfläche (12) des ersten Gehäuses (10) zugewandt ist und mehrere elastisch verformbare Schenkel (43) einschließt, die um den Umfang (13) des ersten Gehäuses (10) angeordnet sind, wobei die Schenkel (43) die erste Verankerung (41) an dem Umfang (13) des ersten Gehäuses (10) befestigen,
die Halterung (40) ferner eine zweite Verankerung (42) einschließt, die neben der ersten Verankerung (41) angeordnet und an dieser befestigt ist und dazu bestimmt ist, an dem Helmgurt fixiert zu werden; und wobei
der Umfang (13) des ersten Gehäuses (10) als regelmäßiges Polygon mit mindestens sechs Flächen ausgebildet ist und die elastisch verformbaren Schenkel (43) ausgebildet sind, eine Verformung zu erfahren, wenn das erste Gehäuse (10) mit einem polygonalen Umfang (13) in Bezug auf die erste Verankerung (41) gedreht wird, jedoch ohne das erste Gehäuse (10) während der Verformung freizugeben; oder der Umfang (13) des ersten Gehäuses (10) kreisförmig ist und die elastisch verformbaren Schenkel (43) der ersten Verankerung (41) ausgebildet sind, um einen elastischen Druck auf den Umfang (13) des ersten Gehäuses (10) auszuüben, wobei die freie Drehung davon behindert wird;
wobei das erste Gehäuse (10) in verschiedenen Winkelpositionen zur ersten Verankerung (41) positioniert werden kann.

2. Kommunikationsvorrichtung nach Anspruch 1, wobei die Schenkel (43) drei Schenkel sind.

3. Kommunikationsvorrichtung nach einem der vorhergehenden Ansprüche, wobei der Umfang (13) des ersten Gehäuses (10) die Form eines Oktogons, Dekagons oder Dodekagons hat, wobei das erste Gehäuse (10) in verschiedenen Winkelpositionen mit einer Differenz von jeweils 45°, 36° oder 30° zur ersten Verankerung (41) positioniert werden kann.

4. Kommunikationsvorrichtung nach einem der vorhergehenden Ansprüche, wobei die zweite Verankerung (42) eine anpassbare Schiebeschnalle ist.

5. Kommunikationsvorrichtung nach Anspruch 4, wobei die anpassbare Schiebeschnalle aus einem Mittelsteg (44) und einem Rahmen besteht, in den zwei Rahmenstege (45) integriert sind, die parallel zu dem Mittelsteg (44) und von diesem getrennt sind.

6. Drahtlose Kommunikationsvorrichtung nach Anspruch 5, wobei der Mittelsteg (44) oder die Rahmenstege (45) eine Unterbrechung einschließen.

7. Drahtlose Kommunikationsvorrichtung nach Anspruch 5 oder 6, wobei die zweite Verankerung (42) mit der ersten Verankerung (41) über einen anderen Abschnitt des Rahmens der anpassbaren Schiebeschnalle als die Rahmenstäbe (45) verbunden ist.

8. Drahtlose Kommunikationsvorrichtung nach einem der vorhergehenden Ansprüche 1 bis 3, wobei die zweite Verankerung (42) eine Klemme ist, die dazu bestimmt ist, den Helmgurt zu umgeben und auf ihn zu drücken, oder ein Dreizack, der dazu bestimmt ist, dass der Helmgurt zickzackförmig durch ihn hindurchgeht.

9. Drahtlose Kommunikationsvorrichtung nach einem der vorhergehenden Ansprüche, wobei die erste Verankerung (41) und die zweite Verankerung (42) aneinander befestigt sind und monolithisch sind.

10. Drahtlose Kommunikationsvorrichtung nach einem der vorhergehenden Ansprüche, wobei die drahtlose Kommunikationsvorrichtung ferner einen zusätzlichen Lautsprecher einschließt, der in einem dritten Gehäuse enthalten ist, das an einer zusätzlichen Halterung fixiert ist, die mit einer zusätzlichen zweiten Verankerung mit denselben Eigenschaften wie die zweite Verankerung (42) ausgestattet ist, wobei der zusätzliche Lautsprecher mit dem Rest der drahtlosen Kommunikationsvorrichtung durch ein Kabel oder durch drahtlose Mittel verbunden ist.

## Revendications

1. Dispositif de communication sans fil avec un support configuré pour être fixé à une sangle de casque, comprenant :
un haut-parleur contenu dans un premier logement aplati (10) qui définit une face interne principale, associée avec le haut-parleur et destinée à faire face à l'oreille d'un utilisateur, une face externe principale (12) et un périmètre (13) reliant une zone périmétrique de la face interne principale et de la face externe principale ;
un microphone, dans lequel le microphone est contenu dans un deuxième logement (20) relié au, et à distance du, premier logement (10) par un conduit rigide ou déformable (30) ;
une batterie et une antenne sont reliées au haut-parleur et au microphone et sont contenues dans ledit premier et/ou deuxième logement (10, 20) ;
**caractérisé en ce que**
le support (40) comporte un premier ancrage (41), faisant face à la face externe principale (12) du premier logement (10) et comportant plusieurs pattes élastiquement déformables (43) disposées autour du périmètre (13) du premier logement (10), lesdites pattes (43) fixant le premier ancrage (41) au périmètre (13) du premier logement (10),
le support (40) comporte en outre un deuxième ancrage (42), adjacent et fixé au premier ancrage (41), destiné à être fixé à la sangle de casque ; et dans lequel le périmètre (13) du premier logement (10) est en forme d'un polygone régulier avec au moins six faces et les pattes élastiquement déformables (43) sont configurées pour subir une déformation lorsque le premier logement (10) avec un périmètre polygonal (13) tourne par rapport au premier ancrage (41), mais sans libérer le premier logement (10) pendant ladite déformation ; ou
le périmètre (13) du premier logement (10) est circulaire et les pattes élastiquement déformables (43) du premier ancrage (41) sont configurées pour exercer une pression élastique sur ledit périmètre (13) du premier logement (10), gênant la libre rotation de celui-ci ;
permettant au premier logement (10) d'être positionné à des différentes positions angulaires par rapport au premier ancrage (41).

2. Dispositif de communication selon la revendication 1, dans lequel les pattes (43) sont trois pattes.

3. Dispositif de communication selon l'une quelconque des revendications précédentes, dans lequel le périmètre (13) du premier logement (10) est sous forme d'octogone, de décagone ou de dodécagone, permettant au premier logement (10) d'être positionné à des différentes positions angulaires avec une différence de 45°, 36° ou 30°, respectivement, par rapport au premier ancrage (41).

4. Dispositif de communication selon l'une quelconque des revendications précédentes, dans lequel le deuxième ancrage (42) est une boucle coulissante réglable.

5. Dispositif de communication selon la revendication 4, dans lequel la boucle coulissante réglable est constituée d'une barre centrale (44) et d'un cadre intégrant deux barres de cadre (45) parallèles à, et séparées de, la barre centrale (44).

6. Dispositif de communication sans fil selon la revendication 5, dans lequel la barre centrale (44) ou les barres de cadre (45) comportent une interruption.

7. Dispositif de communication sans fil selon la revendication 5 ou 6, dans lequel le deuxième ancrage (42) est relié au premier ancrage (41) par le biais d'une portion du cadre de la boucle coulissante réglable autre que les barres de cadre (45).

8. Dispositif de communication sans fil selon l'une quelconque des revendications précédentes 1 à 3, dans lequel le deuxième ancrage (42) est une pince, destinée à entourer et presser sur la sangle de casque, ou un trident, destiné à être traversé par la sangle de casque le traverse en zigzag.

9. Dispositif de communication sans fil selon l'une quelconque des revendications précédentes, dans lequel le premier ancrage (41) et le deuxième ancrage (42) sont fixés l'un à l'autre et son monolithiques.

10. Dispositif de communication sans fil selon l'une quelconque des revendications précédentes, dans lequel le dispositif de communication sans fil comporte en outre un haut-parleur additionnel contenu dans un troisième logement fixé à un support additionnel équipé d'un deuxième ancrage additionnel avec les mêmes caractéristiques que le deuxième ancrage (42), le haut-parleur additionnel étant relié au reste du dispositif de communication sans fil par un câble ou par des moyens sans fil.
